# EUROPÄISCHE PATENTSCHRIFT

(11) **EP 0 390 156 B1**
(45) Veröffentlichungstag und Bekanntmachung des Hinweises auf die Patenterteilung: **12.05.1993**
(21) Anmeldenummer: 90106047.5
(22) Anmeldetag: 29.03.1990
(51) Int. Cl.: F16C 29/06

(54) **Linearkugelbüchse mit Abdichtung**
Linear ball bearing with sealing
Palier linéaire à billes étanche

(30) Priorität: 31.03.1989 DE 3910457
(43) Veröffentlichungstag der Anmeldung: 03.10.1990
(60) Teilanmeldung: 92109951.1
(73) Patentinhaber: Deutsche Star GmbH, 97424 Schweinfurt (DE)
(72) Erfinder: Albert, Ernst, D-8729 Sand/Main (DE); Dütsch, German, D-8720 Schweinfurt (DE); Höfling, Rainer, D-8725 Arnstein (DE)
(74) Vertreter: Weickmann, Heinrich, Dipl.-Ing.

(56) Entgegenhaltungen:
- EP-A- 0 211 243
- DE-A- 3 512 858
- FR-A- 2 248 439
- FR-A- 2 388 159
- GB-A- 2 066 378
- US-A- 4 005 913

## Beschreibung

Die Erfindung betrifft eine teilringförmige Linearkugelbüchse, umfassend einen Käfig mit einer Käfigachse, mit einer Mehrzahl von Kugelumläufen und mit einem durch Längsflächen definierten Spalt,
wobei jeder Kugelumlauf zwei zur Käfigachse im wesentlichen parallele Geradkugelreihen, nämlich eine Tragkugelreihe und eine Rücklaufkugelreihe und zwei die beiden Geradkugelreihen verbindende Bogenkugelreihen aufweist,
wobei weiter die jeweilige Tragkugelreihe nach radial außen durch einen tragenden Geradlaufbahnabschnitt abgestützt ist und nach radial innen einen Schlitz des Käfigs teilweise durchdringt, um an einer von dem Käfig teilweise umschlossenen Welle Anlage nehmen zu können,
wobei weiter gewünschtenfalls an dem Käfig nahe dessen den Längsspalt begrenzenden Längsflächen Längsdichtungsleisten zur Anlage an der Welle vorgesehen sind und
wobei nahe den axial gerichteten Enden des Käfigs Teilringdichtungen zur Anlage an der Welle vorgesehen und durch Formschlußmittel gegen Verdrehung um die Käfigachse gesichert sind.

Aus der gattungsährliche DE-A-35 12 858 ist eine teilringförmige Linearkugelbüchse dieser Bauart bekannt. Dabei sind die Teilringdichtungen an den axialen Endflächen des Käfigs starr befestigt, z.B. durch Ankleben, durch Ultraschall-Verschweißung oder durch Aufnahme in entsprechende Nuten. Die starre Befestigung der Teilringdichtungen sichert zwar diese Teilringdichtungen gegen eine unbeabsichtigte Verdrehung um die Käfigachse; wenn aber Fluchtabweichungen der Wellenachse gegenüber der Achse der Aufnahmebohrung auftreten, so ist ein gleichmäßiges Anliegen der Teilringdichtungen an der Welle nicht mehr gewährleistet, und es können größere Spalte zwischen den Teilringdichtungen und der Welle auftreten.

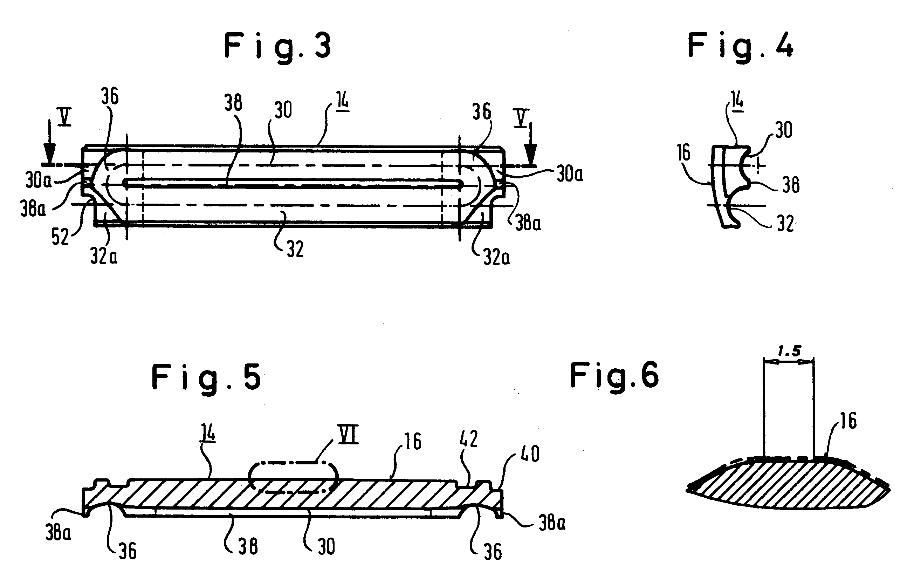

Aus der FR-A-2 388 159 ist eine gattungsgemäße Linearkugelbüchse bekannt, die ausweislich der Figur 4 teilringförmig gestaltet werden kann. Dabei sind die Dichtungen an axial gerichteten Endflächen des Käfigs durch Bolzen angebracht, welche gleichmäßig über den Umfang des Käfigs verteilt angeordnet sind. Dabei können je nach Bemessung der Winkelbreite des Längsspalts und der Teilung der Bolzenanordnung Bolzen in die Nähe der den Spalt definierenden Längsflächen zu liegen kommen. Dann sind aber immer noch ein oder mehrere Bolzen über den Teilringumfangsbereich der Linearkugelbüchse verteilt angeordnet, mit der Folge, daß bei Fluchtabweichungen der Wellenachse wiederum ein gleichmäßiges Anliegen der Teilringdichtungen an der Welle nicht gewährleistet und größere Spalte zwischen den Teilringdichtungen und der Welle auftreten können.

Der Erfindung liegt die Aufgabe zugrunde, eine Linearkugelbüchse der eingangs bezeichneten Art anzugeben, bei der die Teilringdichtungen einerseits gegenüber Verdrehung um die Käfigachse relativ zum Längsspalt gesichert sind, andererseits aber ein dichtes Anliegen der Teilringdichtungen an der Welle auf dem größten Teil der Umfangslänge der Teilringdichtungen auch dann gewährleistet ist, wenn Fluchtabweichungen zwischen der Wellenachse und der die Linearkugelbüchse aufnehmenden Lagerbohrung auftreten.

Erfindungsgemäß ist zur Lösung dieser Aufgabe nach einer ersten Alternative vorgesehen, daß die Formschlußmittel ausschließlich nahe den Längsflächen gelegen sind.

Bei dieser Ausführungsform ist eine Anpassung der Teilringdichtung an die Welle in dem Umfangsbereich der Linearkugelbüchse zwischen den endflächennahen Formschlußmitteln möglich, so daß die Gefahr der Bildung größerer Spalte zwischen den Teilringdichtungen und der Welle unterbunden ist.

Alternativ ist auch ein zweites Lösungsprinzip anwendbar, dem zufolge die Teilringdichtungen über ihre gesamte Umfangserstreckung radial gegenüber der Käfigachse beweglich sind.

Bei einer solchen Ausführungsform ist sowohl im Endbereich als auch zwischen den Endbereichen eine Anpassung der Teiringdichtungen an etwaige Fluchtabweichungen der Wellenachse möglich, ohne daß es notwendigerweise einer Beschränkung der Formschlußmittel auf die längsflächennahen Bereiche bedarf.

Eine radiale Beweglichkeit der Teilringdichtungen gegenüber der Käfigachse kann insbesondere dadurch erreicht werden, daß die Formschlußmittel ein gewisses radiales Spiel der Teilringdichtungen erlauben. Dieses radiale Spiel kann aber gegen null gehen, ohne daß die wesentliche Wirkung der Erfindung verloren geht, wenn nur die Formschlußmittel auf den Spaltbereich beschränkt sind.
Eine trotz der geforderten radialen Beweglichkeit zuverlässige Lagerung der Teilringdichtungen an dem Käfig kann dadurch bewerkstelligt werden, dass die Teilringdichtungen mittels eines radial äusseren Grundkörpers in jeweils einer Teilringnut am Käfig radial beweglich aufgenommen sind und mittels einer radial inneren Dichtlippe an der Welle anliegen.

Fertigungstechnisch und montagetechnisch ist es besonders vorteilhaft, wenn.die Teilringnut durch einander gegenüberliegende , axial gerichtete Teilringnutbegrenzungsflächen des Käfigs und eines an dem Käfig befestigten Endrings begrenzt sind. Dabei ist insbesondere der Einbau der jeweiligen Teilringdichtung erleichtert, indem diese axial gegen die jeweilige Teilringnutbegrenzungsfläche des Käfigs angelegt wird und hierauf der Endring angebracht wird.

Eine einfache Möglichkeit der peripheren Lagesicherung der Teilringdichtung besteht darin, dass an der axial gerichteten Teilringnutbegrenzungsfläche des Käfigs mindestens ein axial gerichteter Nocken angebracht ist, welcher eine Durchbrechung des Dichtungsrings mit radialem Spiel durchsetzt.

Um sicherzustellen, dass die Teilringdichtung zwischen den Teilringnutbegrenzungsflächen des Käfigs und des Endrings nicht eingeklemmt werden kann und damit ihre radiale Beweglichkeit verliert, wird vorgeschlagen, dass die axiale Höhe des Nockens grösser ist als die entsprechende axiale Dicke der Teilringdichtung und dass der Endring mit seiner Teilringnutbegrenzungsfläche an dem Nocken anliegt.

Dadurch dass der Endring mit dem Käfig im Bereich des Nockens verschraubt ist, erreicht man, dass der Endring keiner Verformung unterworfen wird und für die Befestigungsschrauben keine zusätzlichen Aussparungen notwendig sind.

Eine vorteilhafte Befestigungsart für die Längsdichtungsleisten erhält man dann, wenn die Längsdichtungsleisten jeweils einen von einer Längsnut des Käfigs aufgenommenen Wurzelteil und einen an der Welle anliegenden Zungenteil aufweisen. Zur Anpassung der Längsdichtungsleisten an Fluchtabweichungen empfiehlt es sich,dass der Wurzelteil in der jeweiligen Längsnut radial bezüglich der Käfigachse beweglich ist.

Die Längsdichtungsleisten haben einen sehr geringen Querschnitt und werden aus gummi-elastischem Material gefertigt. Um gleichwohl eine sichere Lagerung der Längsdichtungsleisten zu gewährleisten, auch wenn die Längsdichtungsleisten nicht mehr - wie im Stand der Technik - angeklebt sind und insbesondere zu verhindern, dass die Längsdichtungsleisten bei Längsbewegungen der Welle gegenüber dem Käfig unter Faltenbildung verformt werden, wird vorgeschlagen, dass die Längsdichtungsleisten an ihren Enden Vorsprünge aufweisen, welche unter einer Längsspannung der jeweiligen Längsdichtungsleiste gegen jeweils eine axial gerichtete Stützschulter des Käfigs anliegen.

Um die Längsdichtungsleisten und die Teilringdichtungen möglichst nah aneinander heranführen zu können, und damit eine besonders zuverlässige Abdichtung des gesamten Kugelbereichs zu gewährleisten, wird vorgeschlagen, dass die Stützschulter durch jeweils eine Ausnehmung im Käfig angrenzend an die axial gerichtete Ringnutbegrenzungsfläche des Käfigs gebildet ist.

Eine optimale Abdichtung auch im Annäherungsbereich der Längsdichtungsleisten und der Teilringdichtungen erzielt man dadurch, dass die Längsdichtungsleisten über den jeweiligen Vorsprung in die Ringnut hineinragende Fortsätze besitzen und dass die Teilringdichtungen mit ihren Enden jeweils an einem Fortsatz anliegen.

Weiter wird als vorteilhaft vorgeschlagen, dass die Längsdichtungsleiste an ihren Enden jeweils axial ausserhalb der Vorsprünge Griffelemente aufweist, welche nach Einbau der jeweiligen Längsdichtungsleiste in die jeweilige Längsnut ggfs. unter Belassung der Fortsätze abtrennbar sind. Man erreicht durch diese Ausbildung der Längsdichtungsleiste eine besonders einfache Montage.

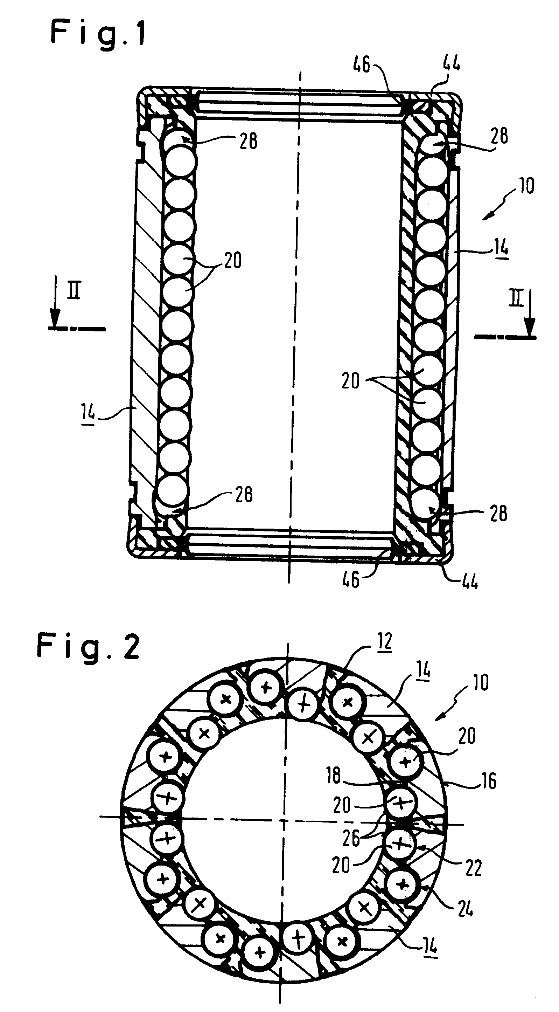

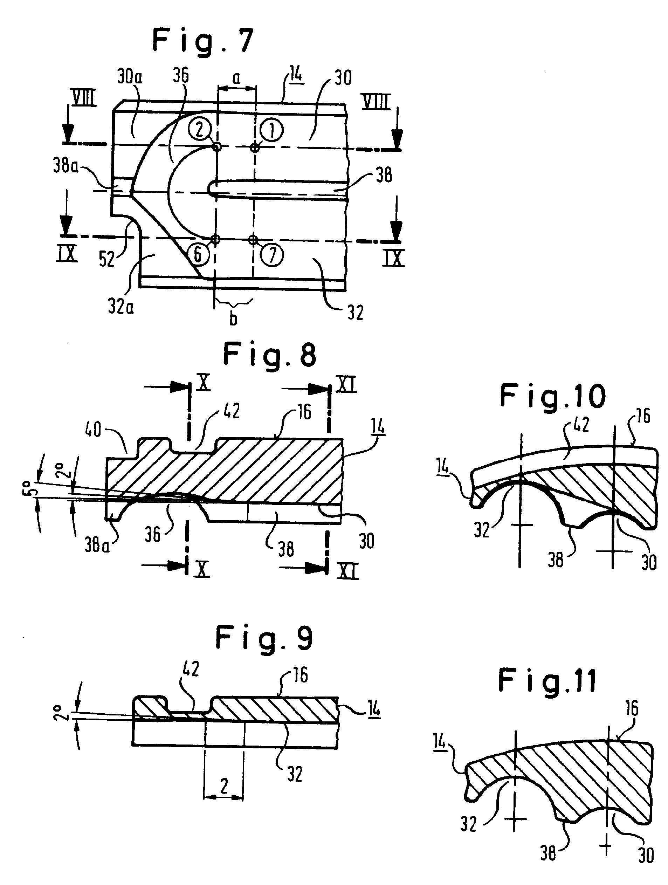

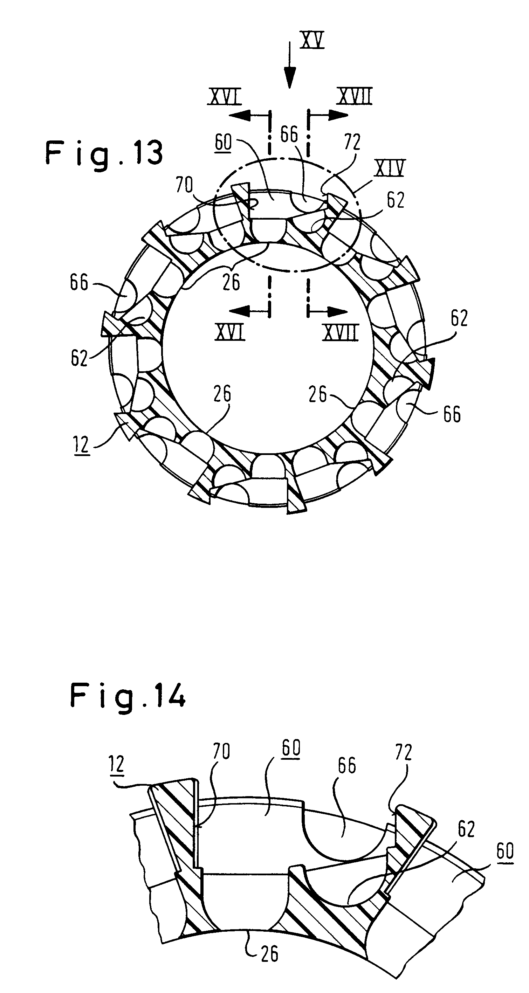

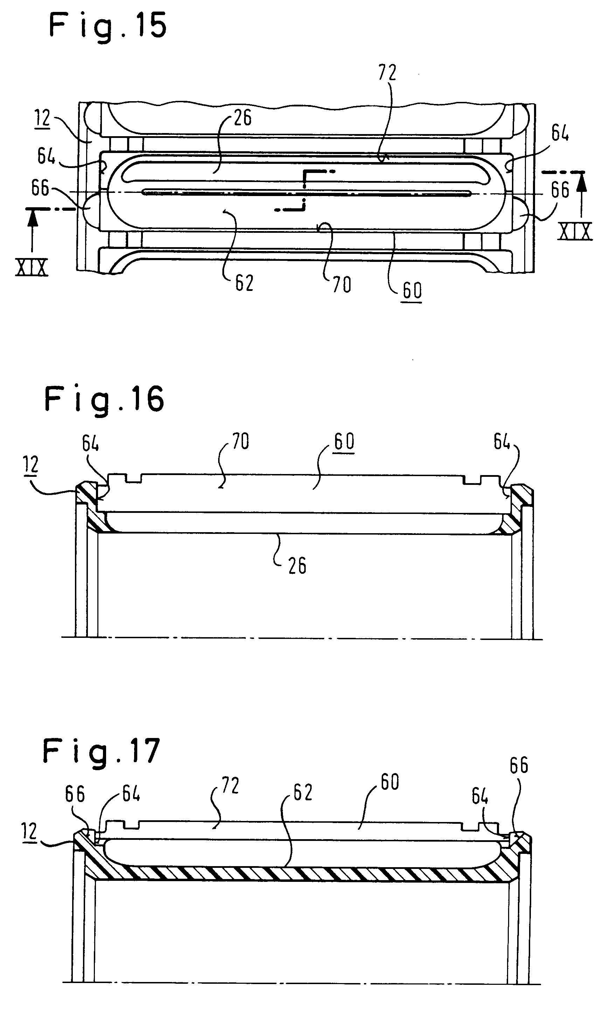

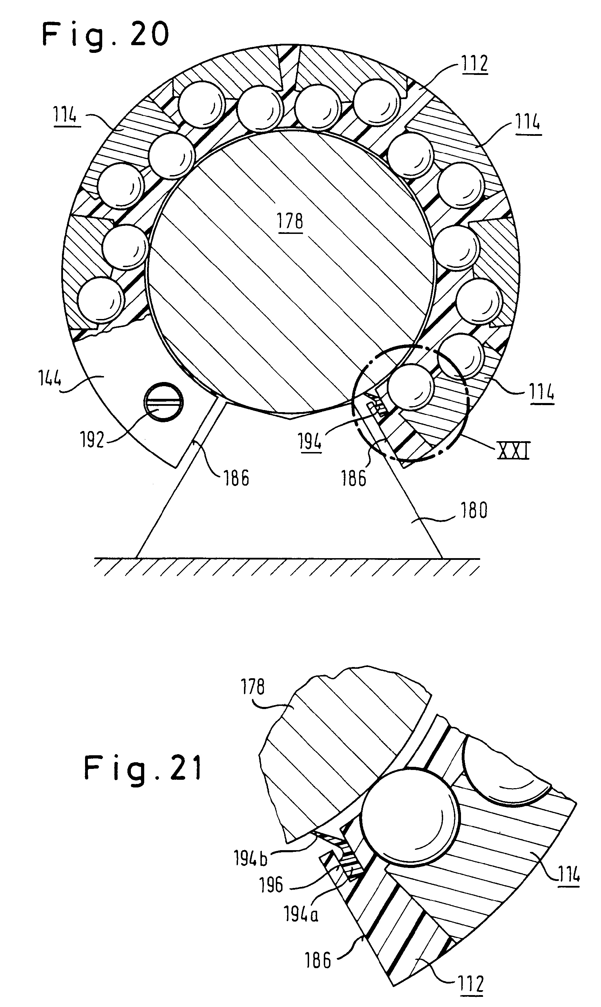

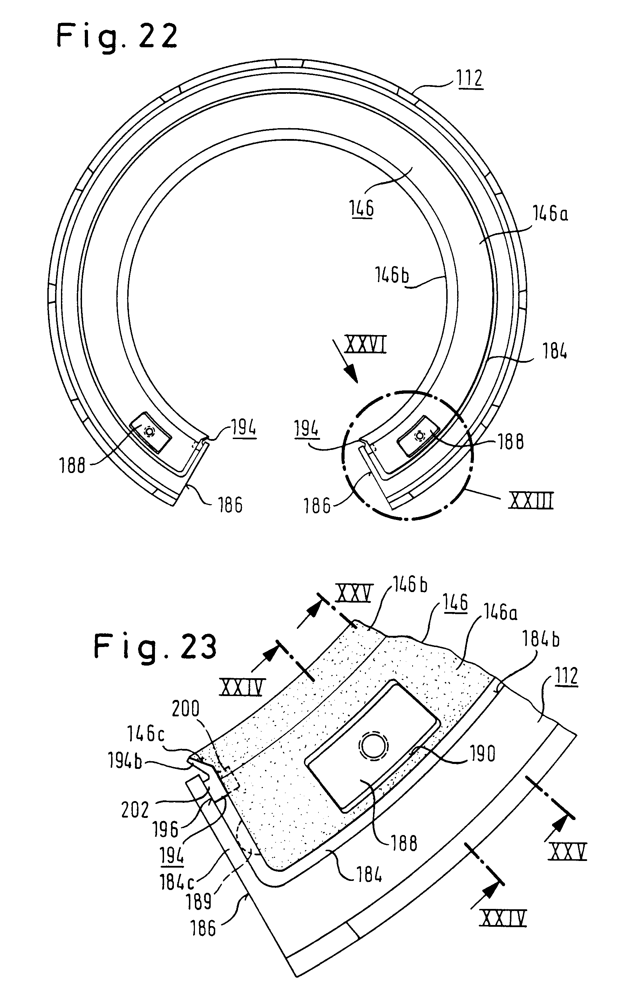

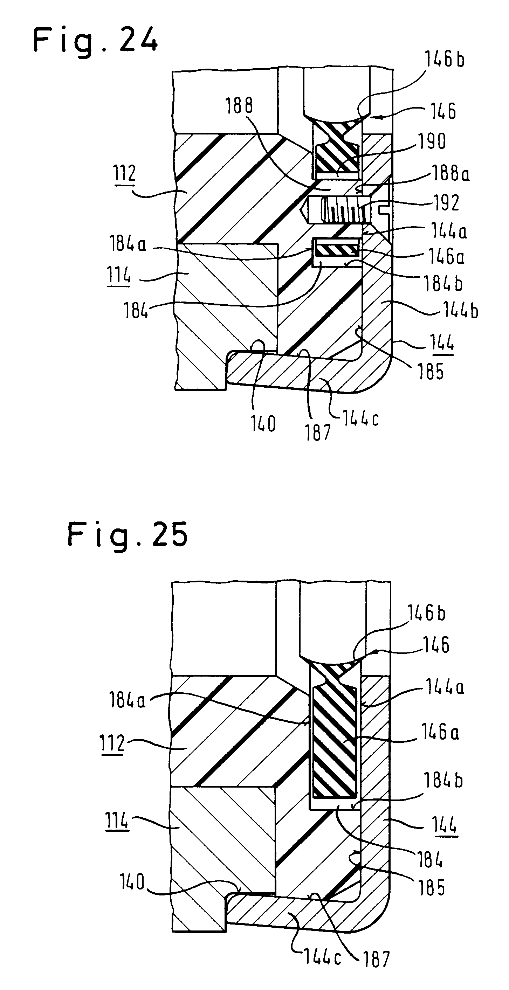

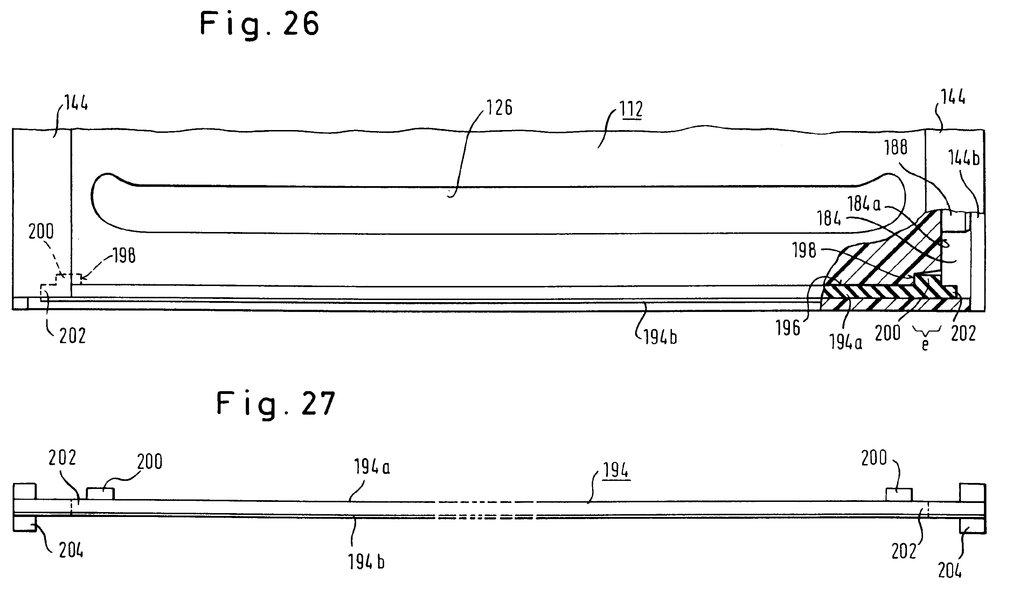

Die beiliegenden Figuren erläutern die Erfindung anhand eines Ausführungsbeispiels. Es stellen dar:
zur Darstellung des technischen Gesamtzusammenhangs
Figur 1
   einen Längsschnitt durch eine erfindingsgemässe Linearkugelbüchse;
Figur 2
   einen Querschnitt nach Linie II - II der Figur 1;
Figur 3
   eine Ansicht der Innenseite einer Laufplatte;
Figur 4
   eine Endansicht einer Laufplatte gemäss Figur 3;
Figur 5
   einen Schnitt nach Linie V - V der Figur 3;
Figur 6
   eine Vergrösserung des Bereichs VI der Figur 5 in einem Schnitt entsprechend demjenigen der Figur 5;
Figur 7
   eine Vergrösserung eines Endabschnitts der Laufplatte gemäss Figur 3;
Figur 8
   einen Schnitt nach Linie VIII - VIII der Figur 7;
Figur 9
   einen Schnitt nach Linie IX - IX der Figur 7;
Figur 10
   einen Schnitt nach Linie X - X der Figur 8;
Figur 11
   einen Schnitt nach Linie XI - XI der Figur 8;
Figur 12
   einen Niveauplan mit tabellarischer Erfassung der Sohlenniveaus der Laufbahn in einem Endabschnitt der Laufplatte gemäss Figur 7;
Figur 13
   einen Querschnitt durch einen Käfig entlang Linie II - II der Figur 1, jedoch nach Entfernung der Laufplatten und Kugeln;
Figur 14
   ein Detail zu Figur 13 in Vergrösserung;
Figur 15
   eine Teilansicht des Käfigs in Pfeilrichtung XV der Figur 13;
Figur 16
   einen Längsschnitt durch den Käfig nach Linie XVI - XVI der Figur 13;
Figur 17
   einen Längsschnitt nach Linie XVII - XVII der Figur 13;
Figur 18
   eine Teilansicht einer Laufplatte entsprechend Figur 7, jedoch mit einer Endabschrägung;
Figur 19
   einen Schnitt nach Linie XIX - XIX der Figur 15 beim Einfüllen von Kugeln;
   zur Darstellung der eigentlichen Erfindung
Figur 20
   einen Schnitt durch ein Linearkugellager gemäss Figur 1, jedoch insofern abgewandelt, als der Käfig zur Aufnahme einer Unterstützung für die Welle teilringförmig ausgebildet ist;
Figur 21
   ein Detail entsprechend der Stelle XXI der Figur 20 in Vergrösserung;
Figur 22
   eine Endansicht eines Linearkugellagers gemäss Figur 20, wobei ein ebenfalls teilringförmiger , topfringförmiger Endring abgenommen ist;
Figur 23
   eine Vergrösserung des Details XXIII der Figur 22;
Figur 24
   einen Schnitt nach Linie XXIV - XXIV der Figur 23;
Figur 25
   einen Schnitt nach Linie XXV - XXV der Figur 23;
Figur 26
   eine Teilansicht in Richtung des Pfeiles XXVI der Figur 22, teilweise geschnitten;
Figur 27
   eine Längsdichtungsleiste als Detail zur Figur 26 und
Figur 28
   eine Darstellung der Laufplatte entsprechend Figur 6.

In Figur 1 und 2 ist eine Linearkugelbüchse ganz allgemein mit 10 bezeichnet. Sie umfaßt einen Käfig 12 aus hartelastischem Kunststoff. In diesen Käfig 12 sind Laufplatten 14 eingesetzt, welche jeweils eine Außenumfangsfläche 16 zur Anlage an einer die Linearkugelbüchse 10 aufnehmenden Lagergehäusebohrung und eine Innenumfangsfläche 18 besitzen. Die Laufplatten 14 bestehen aus einem harten Werkstoff, insbesondere gehärtetem,Stahl. Durch den Käfig 12 und die Laufplatten 14 ist jeweils eine Führung für einen Kugelumlauf gebildet. Die Kugeln sind mit 20 bezeichnet. Jeder Kugelumlauf bildet eine Tragkugelreihe 22 und eine Rücklaufkugelreihe 24. Die Tragkugelreihen 22 ragen durch Shlitze 26 des Käfigs 12 hindurch nach radial innen zur Anlage an einer nicht dargestellten Welle. Die Rücklaufkugelreihen 24 sind nach radial innen durch den Käfig 12 gestützt. Beide Geradkugelreihen 22 und 24 liegen an der Innenumfangsfläche 18 der jeweiligen Laufplatte 14 an. Die Tragkugelreihe 22 und die Rücklaufkugelreihe 24 sind jeweils durch Bogenkugelreihen 28 verbunden. Die Laufplatten 14 sind in dem Käfig 12 formschlüssig gehalten, jedoch mit einem gewissen Bewegungsspiel.

In Figuren 3, 4 und 5 ist eine Laufplatte 14 im einzelnen dargestellt. Diese Laufplatte 14 ist auf der Basis eines Profilstabs hergestellt, dessen Profil aus Figur 4 ersichtlich ist. Die Laufplatte 14 weist einen tragenden Geradlaufbahnabschnitt 30 auf, welcher gegenüber der Außenumfangsfläche 16 ein erstes höheres Niveau besitzt und einen rückführenden Geradlaufbahnabschnitt 32, welcher gegenüber der Außenumfangsfläche 16 ein niedrigeres Niveau besitzt. Der tragende Laufbahnabschnitt 30 dient zur Aufnahme der Tragkugelreihe 22 und der Geradlaufbahnabschnitt 32 zur Aufnahme der Rücklaufkugelreihe 24. Die beiden Geradlaufbahnabschnitte 30 und 32 sind durch Bogenlaufbahnabschnitte 36 miteinander verbunden. Die Geradlaufbahnabschnitte 30 und 32 erstrecken sich jedoch mit den Endabschnitten 30a bzw. 32a im wesentlichen profilkonstant bis an die Enden der Laufplatte 14. Zwischen den Geradlaufbahnabschnitten 30 und 32 liegt eine Mittelrippe 38. Die Mittelrippe 38 setzt sich mit Endabschnitten 38a bis an die Enden der Laufplatte 14 profilkonstant fort und ist durch die Bogenlaufbahnabschnitte 36 lediglich unterbrochen. An ihrer Aussenumfangsfläche 16 ist die Laufbahnplatte, wie in Figur 6 dargestellt, gekrümmt, so daß sie schaukelnd an der Innenumfangsfläche einer Lagergehäusebohrung zur Anlage kommt. Wie aus Figur 4 ersichtlich sind die Geradlaufbahnabschnitte 30 und 32 gerundet mit einem Krümmungsradius, der gleich oder wenig größer ist als der Radius der Kugeln 20.

In Figur 5 erkennt man an den Enden der Laufplatte Ausdrehungen 40 und 42. Die Ausdrehungen 40 sind zur Aufnahme von topfförmigen Endringen 44 (Figur 1) bestimmt, welche die Laufplatte 14 und Abschlußscheiben 46 am Käfig 12 sichern. Die Eindrehungen 42 sind dazu bestimmt, Sicherungsringe zur axialen Sicherung der Kugelbüchse in einer Aufnahmebohrung aufzunehmen.

Nähere Einzelheiten über die Ausbildung der Laufbahnen ergeben sich aus den Figuren 7 bis 11. Die Bogenlaufbahnabschnitte 36 erstrecken sich über annähernd 180° und sind annähernd kreisförmig gekrümmt. Der Niveauabfall von dem Geradlaufbahnabschnitt 30 zu dem Geradlaufbahnabschnitt 32 beginnt bereits in einem Endabschnitt a des Geradlaufbahnabschnitts 30. Dadurch liegt die Sohle des Bogenlaufbahnabschnitts 36 im Bereich der Verschneidung mit dem Geradlaufbahnabschnitt 30 tiefer als eine gedachte Fortsetzung der Sohle des Geradlaufbahnabschnitts 30,und eine Seitenführung der Kugeln ist auch in.diesem Verschneidungsbereich gewährleistet. Das Niveaugefälle im Endabschnitt a ist durch die Winkelangabe 2° in Figur 8 dargestellt. Das Niveaugefälle im unmittelbar anschließenden Bereich des Bogenlaufbahnabschnitts 36 beträgt, wie in Figur 8 ebenfalls dargestellt, ca. 5°. Es treten keine Niveausprünge auf. Die Gefällsübergänge sind abgerundet. Die Längsausdehnung des Endabschnitts a ist auch nach dem Schleifen so groß, daß die belasteten Kugeln vor Einlauf in den Bogenlaufbahnabschnitt 36 kontinuierlich entlastet werden können. Dies gilt analog auch für die in die Lastzone eintretenden Kugeln. Durch diese Maßnahme ist ein gleichmäßiger und ruckfreier Ablauf gewährleistet. An der Stelle ⑥ in Figur 7 besitzt die Bogenlaufbahn 36 ein Niveauminimum, welches unter dem Niveau der rückführenden Geradlaufbahn 32 liegt. Im Endabschnitt b des rückführenden Geradlaufbahnabschnitts 32 findet ein langsamer Niveauanstieg statt. Es treten keine Niveausprünge auf. Die Gefällsübergänge sind verrundet. Das Niveauminimum ⑥ ist auch nach dem Schleifen des rückführenden Geradlaufbahnabschnitts 32 noch vorhanden. Die Gefällsstrecken a und b der Geradlaufbahnabschnittte 30, 32 sind zusammen mit den Bogenlaufbahnabschnitten 36 geprägt. Die Verjüngung der Rippenbreite der Mittelrippe 38 im Bereich der Endabschnitte a und b ergibt einen trichterförmigen Übergang des Bogenlaufbahnabschnitts 36 in die Geradlaufbahnabschnitte 30 und 32.

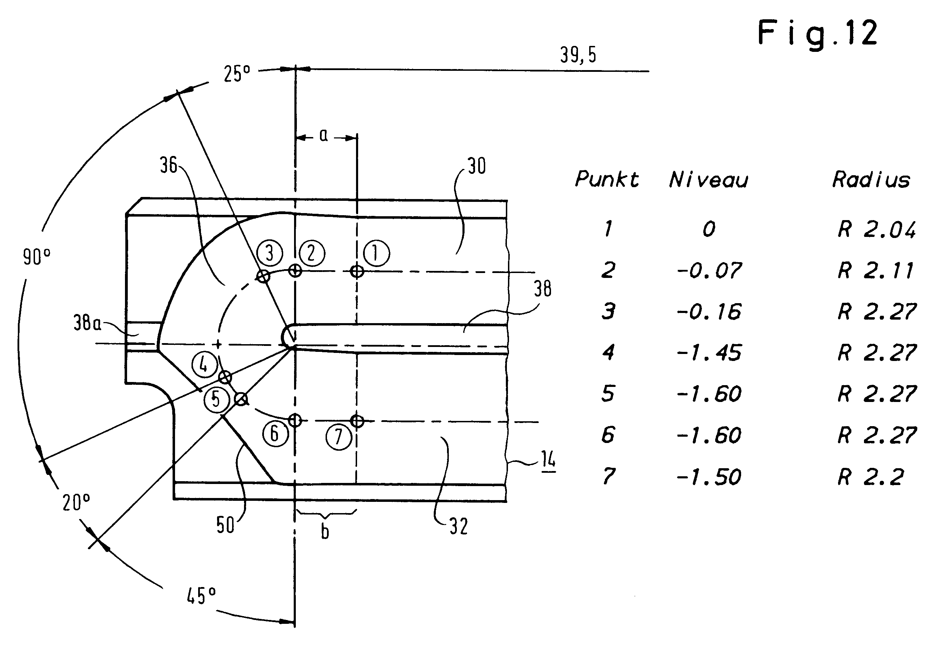

In Figur 12 sind mit ① bis ⑦ verschiedene Meßpunkte bezeichnet, die teilweise auch in Figur 7 eingetragen wurden, um die Relationen zwischen Figur 7 und 12 klar zu machen. Diesen Meßpunkten sind nach der Tabelle der Figur 12 verschiedene Niveauwerte beispielshalber zugeordnet. Die Niveauwerte bezeichnen die relative Niveauhöhe in Millimeter jeweils auf der Sohle der Laufbahn gegenüber dem Sohlenniveau des tragenden Laufbahnabschnitts 30, welches mit Null bewertet ist.

Man erkennt aus der zweiten Spalte der Tabelle ohne weiteres, daß im Bereich ⑤ bis ⑥ ein Niveauminimum vorliegt, und daß von diesem Niveauminimum aus ein Anstieg des Niveaus bis auf die Niveauhöhe der Sohle des rückführenden Geradlaufbahnabschnitts 32 stattfindet. Der Wiederanstieg ⑥ bis ⑦ liegt im wesentlichen in der Rücklaufgeraden des rückführenden Geradlaufbahnabschnitts 32. Den einzelnen Punkten ① bis ⑦ zugeordneten Ortskoordinaten sind durch die Winkelwerte in der Figur 12 bezeichnet. Die Figur 12 vermittelt durch die Längenangabe 39,5 mm auch eine Größenordnungsvorstellung von der Länge der Kugelbüchse. Ergänzend hierzu sei bemerkt, daß der Außendurchmesser des Käfigs 12 im Beispielsfall 40 mm beträgt, daß insgesamt 10 Laufplatten vorgesehen sind, wie in Figur 2 dargestellt, daß die periphere Erstreckung einer Laufplatte 9,7 mm beträgt, und daß der Kugeldurchmesser 3,969 mm beträgt. Schließlich beträgt der Krümmungsradius der Laufbahn an der Sohle gemessen (strichpunktierte Linie in Figur 12) 2,04 mm. In der Tabelle sind schließlich in der vierten Spalte die jeweiligen Radien der Laufbahnabschnitte in Millimetern aufgezeichnet. Man erkennt, daß diese Radien wenig größer sind als der Kugelradius, so daß die Kugeln seitlich geführt sind. Aus der Figur 12 und der Tabelle erkennt man, daß im Bereich ① bis ④ eine Seitenführung gewährleistet ist; diese Seitenführung ist im Scheitelbereich ④ durch den Fortsatz 38a der Rippe 38 ergänzt. Auch in dem relativ unkritischen Bereich ④ bis ⑦ ist noch eine gewisse Seitenführung der Kugeln durch die Laufplatte gewährleistet, wie durch die Verschneidungslinie 50 angedeutet. Es sei noch einmal erwähnt, daß die einzelnen Gefällsstrecken von ① bis ⑦ im wesentlichen stetig ineinander übergehen.

Die Führung der Kugeln ist durch den Käfig 12 ergänzt. Die Führungsflächen in dem Käfig 12 sind mit hoher Präzision so gefertigt, daß sie an die Führungsflächen der Laufplatten versatzlos anschliessen.

Die in den Figuren 3 und 7 erkennbaren Aussparungen 52 dienen zum Teil der Materialaufnahme beim Prägen der Bogenlaufbahnabschnitte 36; anders ausgedrückt: Beim Prägen werden die Laufplatten 14 mit vorher gebildeten Aussparungen in Prägeformen eingelegt, welche der Außenumfangsfläche 16 und den Endflächen anliegen, jedoch im Bereich der Aussparungen 52 so viel Luft lassen, daß das beim Prägen verdrängte Material einfließen kann und dabei die Geometrie der Aussparungen gemäß Figur 7 entsteht.

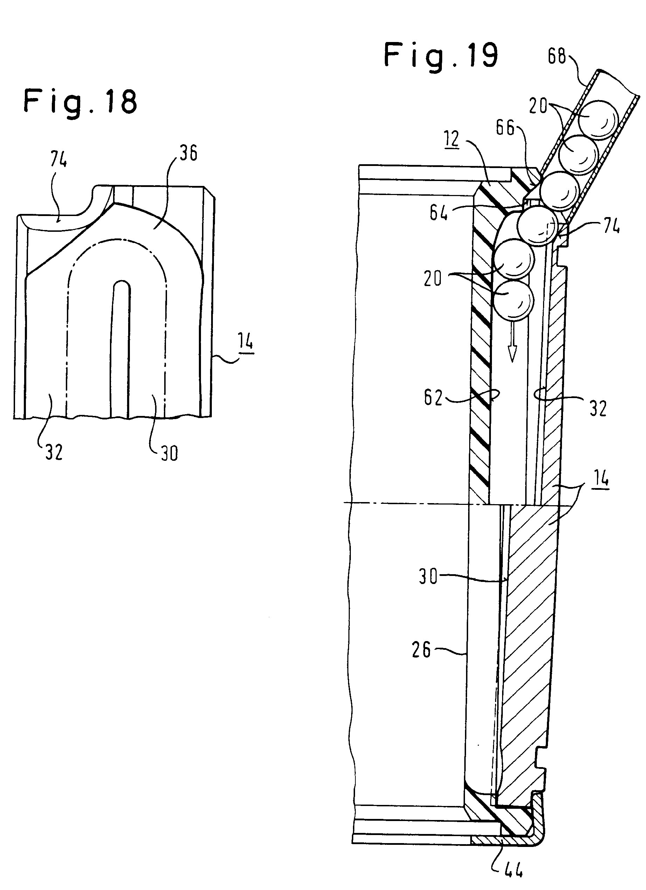

In Figur 13 ist der Käfig gemäss Figur 2 nach Entnahme der Laufplatten 14 und der Kugeln 20 dargestellt. Man erkennt dort die Ausnehmungen 60 für die Aufnahme der Laufplatten 14 der Figur 2. Man erkennt weiter die Schlitze 26, welche den Kugeln der Tragkugelreihe (22) teilweisen Durchtritt gewähren und man erkennt die Laufbahn 62 für die Rücklaufkugelreihe 24 der Figur 2. Dies alles ist in Vergrösserung auch in Figur 14 dargestellt. Man erkennt weiter aus den Figuren 14 und 15, dass an den Enden der Ausnehmungen 60, und zwar angrenzend an die Endflächen 64 der Ausnehmungen 60 in Flucht mit den Laufbahnen 62 rinnenförmige Füllschrägen 66 angeordnet sind, deren Bedeutung insbesondere aus Figur 19 zu ersehen ist. Dort wird zum Einfüllen der Kugeln 20 eines Kugelumlaufs ein Füllrohr 68 angesetzt, so dass es annähernd in Fortsetzung der jeweiligen Füllschräge 66 steht. Dabei ist der obere topfförmige Endring 44 abgenommen, während der untere topfförmige Endring 44 seine Sicherungsposition bezüglich der Laufplatten 14 einnimmt. Da der obere Endring 44 fehlt, kann die Laufplatte 14, wie aus Figur 19 zu ersehen, schräggestellt werden, so dass sie im Bereich der Einlaufschräge 66 den Kugeln 20 Einlass gewährt. Das Schrägstellen der Laufplatten 14 ist möglich, da die Längsbegrenzungsflächen 70, 72 der Ausnehmung 60 annähernd zueinander parallel sind, oder aber das Kunststoffmaterial des Käfigs 12 derart elastisch ist, dass ein Ausstellen der Laufplatte 14 unter Zwang möglich ist.

Das Einfüllen der Kugeln 20 in die Laufbahn 62 der Rücklaufkugelreihe wird noch dadurch erleichtert, dass an der Innenseite der Laufplatte 14, wie aus Figuren 18 und 19 ersichtlich, eine Abschrägung 74 angebracht ist.

Es ist zu bemerken, dass die Art des Einfüllens unter Verwendung der Einfüllschräge 66 und der Abschrägung 74 nicht daran gebunden ist, das an der Laufplatte 14 die beiden Geradlaufbahnabschnitte 30,32 und die Bogenlaufbahnabschnitte 36 angebracht sind. Die Art des Einfüllens wäre vielmehr auch dann denkbar, wenn die Laufplatten 14 auf die Breite der Geradlaufbahnabschnitte 30 der Tragkugelreihen beschränkt wären. In diesem Fall müßten nur die Einfüllschrägen 66 und die Abschrägungen 74 in Flucht mit dem jeweiligen Geradlaufbahnabschnitt 30 einer tragenden Kugelreihe angebracht werden.

In Figur 20 erkennt man ein Linearkugellager, bei dem die Welle 178 durch Ständer 180 unterstützt und der Käfig 112 teilringförmig ausgebildet ist. Der Käfig ist an seinen Enden wieder mit Endringen 144 versehen, welche entsprechend der Umfangserstreckung des Käfigs 112 teilringförmig ausgebildet sind. Zur Verhinderung des Eindringens von Schmutz in den Bereich der Kugeln sind Dichtungen vorgesehen.

In Figur 1 war auf die Abschlußscheiben 46 hingewiesen worden. Dies sind dort die notwendigen Ringdichtungen, die am Käfig durch Endringe 44 gehalten sind und mit einer Dichtlippe an der dort nicht eingezeichneten Welle zur Anlage kommen. Dieser Dichtringe bedarf es auch bei der nunmehr diskutierten Ausführungsform nach Figur 20, und man erkennt diese Dichtringe in den Figuren 22 bis 25, wo sie mit 146 bezeichnet sind und sich zusammensetzen aus einem jeweiligen Grundkörper 146a und einer Dichtlippe 146b. Die Dichtlippe 146b ist auch hier wieder zur Anlage an der Welle 178 der Figur 20 bestimmt. Oer Grundkörper 146a des Dichtrings 146 ist dabei, wie insbesondere aus Figuren 23, 24 und 25 zu ersehen, in einer Ringausnehmung 184 einer Endfläche 185 des Käfigs 112 aufgenommen, welche durch eine axial gerichtete Fläche 184a und eine radial einwärts gerichtete Fläche 184b definiert und an ihren Enden durch Endleisten 184c begrenzt ist. Der Grundkörper 146a liegt mit axialem Spiel zwischen der axial gerichteten Fläche 184a des Käfigs 112 und einer axial gerichteten Fläche 144a des auf der Endfläche 185 aufliegenden Endrings 144. Das Übermaß der Ausnehmung 184 gegenüber dem Durchmesser des Grundkörpers 146a (Figur 25) gewährt dem Grundkörper 146a radiales spiel innerhalb der Ausnehmung 184. Dieses radiale Spiel besteht auch bei der Ausführungsform nach Figur 1, ist auch dort von wesentlicher Bedeutung,ist aber dort bisher nicht erwähnt worden. Das radiale Spiel ist notwendig, um bei einer Winkelverstellung der Welle 178 gegenüber dem Käfig 112 eine Anpassung des Dichtungsrings 146 an die veränderte Geometrie zu ermöglichen. Während nun bei der Ausführungsform nach den Figuren 1 bis 13 der Dichtungsring 46 (dort als Abschlussscheibe bezeichnet) kreisförmig geschlossen ist und deshalb in peripherer Richtung beweglich sein darf, ohne dass dies den Lagerbetrieb stört, sind erfindungsgemäss die Dichtungsringe 146 teilringförmig d.h. offen. Es besteht nach wie vor die Notwendigkeit, den Dichtungsringen 146 radiales Spiel zu gestatten, um ihre Anpassung an veränderte Lagergeometrie bei Fluchtverlust zwischen Welle 178 und Käfig 112 zu ermöglichen. Es besteht aber gleichzeitig die Notwendigkeit, eine Verdrehung der Dichtungsringe 146 zu vermeiden, da diese Dichtungsringe 146 im Fall einer Verdrehungsmöglichkeit über die eine oder andere Endfläche 186 des Käfigs (siehe Figur 22) hervortreten bzw. hinter diese zurücktreten könnten.

Um den Dichtungsring 146 in radialer Richtung beweglich zu lassen, ihn in peripherer Richtung aber festzulegen, ist eine Ausbildung vorgesehen, wie sie in Figuren 23 u.24 im Detail dargestellt ist. Über der axialgerichteten Fläche 184a erheben sich Nocken 188, die auch in Figuren 22 und 23 erkennbar sind. Diese Nocken 188 durchsetzen Durchbrechungen 190, wie aus Figuren 23 und 24 zu ersehen. Dabei haben die Durchbrechungen 190 ein radiales Übermaß gegenüber der Radialbreite der Nocken 188, so dass die Dichtungsringe 146 nach wie vor ein radiales Spiel besitzen. Dabei ist zu beachten, dass gemäss Figur 22 die Nocken 188 lediglich in den Endbereichen des Dichtungsrings 146, also nahe den Stützlagern 180 der Figur 20, angebracht sind. Weiter ist zu beachten, dass die Höhe der Nocken 188 gegenüber der axial gerichteten Fläche 184a des Käfigs 112 grösser ist als die axiale Stärke des jeweiligen Grundkörpers 146a. Die Fläche 144a, also die Innenseite des Topfbodens 144b des topfförmigen Endrings 144 liegt gegen die Endfläche 188a des jeweiligen Nockens 188 an und ist dort mit dem Käfig verschraubt. Die Verschraubung erfolgt mittels einer Senkschraube 192, die in den Nocken 188 eingeschraubt ist. Wegen des Übermaßes der axialen Höhe des Nockens 188 gegenüber der axialen Dicke des Grundkörpers 146 wird auch bei straffem Anziehen der Senkschraube 192 der Grundkörper 144a nicht zwischen den Flächen 184a und 144a eingeklemmt. Auch insoweit bleibt also das radiale spiel des Dichtungsrings 146 erhalten. Gemäß Figur 24 läßt sich auch gut erkennen, daß die Ringwand 144c in die Ausdrehungen 140 der Laufplatten 114 eingreift und an der angeschrägten Außenumfangsfläche 187 des Käfigs 112 anliegt, so daß die Laufplatten 114 in dem Käfig axial und radial gehalten sind. Es ist zu bemerken, daß die periphere Festlegung der Ringdichtungen auch durch Vorsprünge 189 der Ringdichtungen 146 gegen die Endleisten 184c (Figur 23) erfolgen kann. Dann bräuchte man die Nocken 188 trotzdem zur Befestigung der Endringe 144. Die Nocken 188 könnten dann aber peripheres Spiel gegenüber den Durchbrechungen 190 neben dem weiterhin notwendigen Radialspiel besitzen.

Mit den Ringdichtungen 146 allein ist das Dichtungsproblem noch nicht vollständig gelöst. Wie aus den Figuren 20 bis 23 sowie 26 und 27 ersichtlich, sind im Bereich der Spaltbegrenzungsflächen 186 in dem Käfig 112 auch Längsdichtungsleisten 194 mit einem Wurzelteil 194a und einem an der Welle 178 anliegenden Zungenteil 194b vorgesehen.

Der Wurzelteil 194a ist in einer axial verlaufenden und radial einwärts offenen Nut 196 des Käfigs 112 nahe dessen jeweiliger Spaltbegrenzungsfläche 186 eingesetzt. Die Nuten 196 erstrecken sich jeweils bis zu den axial gerichteten Flächen 184a und sind in ihren Endabschnitten e peripher erweitert, so daß Stützschultern 198 gebildet sind (Figur 26). Die Wurzelteile 194a der Längsdichtungsleisten 194 weisen in den axialen Endbereichen peripher vorspringende Vorsprünge 200 auf, die sich gegen die Stützschultern 198 anlegen. Die Längsdichtungsleisten 194 besitzen Fortsätze 202 gleichbleibenden Profils mit Wurzelteil 194a und Zungenteil 194b, welche über die Vorsprünge 200 hinaus axial in Richtung auf die Bodenwand 144b des Endrings 144 in die Ringausnehmung 144 hinein vorstehen, so daß, wie in Figur 23 dargestellt, der Dichtungsring 146 an dem Fortsatz 202 zur Anlage kommt. Die in peripherer Richtung weisenden Endflächen 146c sind an das Profil der Dichtleisten 194 angepaßt. Durch das gegenseitige Anliegen der Fortsätze 202 und der Dichtungsringe 146 im Bereich der Ausnehmung 184 ist der Zwischenraum zwischen der Welle 178 und dem Käfig 112 vollständig abgedichtet.

Die Figur 27 lässt die Längsdichtungsleiste 194 vor der Montage erkennen. Axial ausserhalb der Vorsprünge 200 sind an den beiden Enden einer Längsdichtungsleiste 194 Griffelemente 204 angebracht, die es bei der Montage der Längsdichtungsleisten 194 ermöglichen, deren zwischen den Vorsprüngen 200 gelegene Abschnitte so zu dehnen, dass die Vorsprünge 200 über die Schulterflächen 198 vorgeschoben und auf diesen aufgelagert werden können. Nach erfolgter Montage werden die Griffelemente 204 ausserhalb der Fortsätze 202 unter Belassung der Fortsätze 202 abgetrennt.

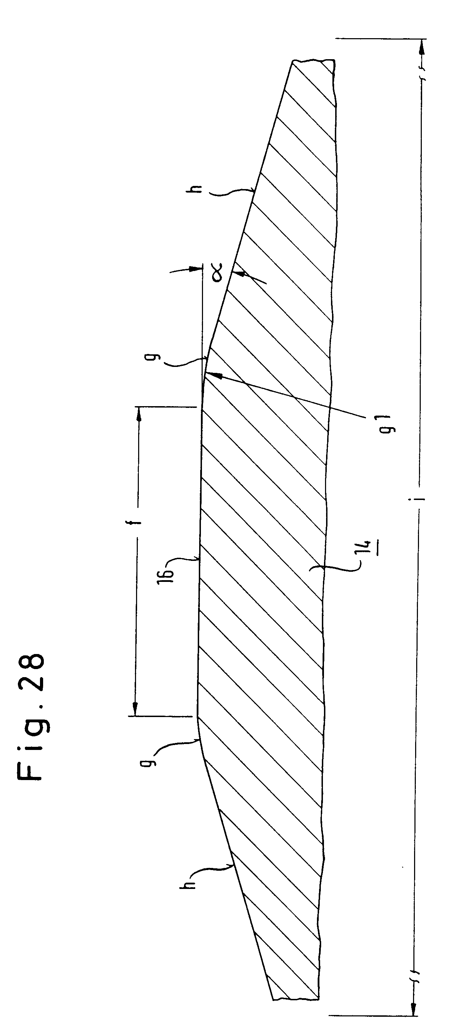

In Figur 28 erkennt man eine Laufplatte 14 wieder, deren Aussenfläche 16 in Figur 6 bereits schematisch angedeutet worden ist. Die Aussenfläche 16 weist einen mittleren geradlinig verlaufenden Längsabschnitt f auf, an den sich über Übergangsrundungen g mit einem Krümmungsradius gl jeweils ein axialer Längsabschnitt h anschliesst, der ebenfalls geradlining ist. Der Längsabschnitt h schliesst mit dem Längsabschnitt f einen Winkel α von 35 Winkelminuten ein. Die Gesamtlänge der tragenden Kugelreihe ist mit i bezeichnet. Bezüglich der Grössenverhältnisse gilt folgendes:

Die Länge i der Tragkugelreihe beträgt ca. 100 % bis ca. 200 %, vorzugsweise ca. 130 % bis ca. 180 % des Durchmessers der Welle 178; die Länge des mittleren Längsabschnitts f beträgt ca. 2 % bis ca. 15 %, vorzugsweise ca. 5 % bis ca. 10 % des Durchmessers der Welle 178; der Krümmungsradius gl der Übergangsrundung g beträgt mehr als ca. 100 %, vorzugsweise mehr als ca. 150 % und beispielweise 167 % bis 300 % des Durchmessers der Welle 178. Die Winkelneigung α beträgt ca. 25 bis 45 Winkelminuten, im Beispielsfall ca. 35 Winkelminuten.

Es hat sich gezeigt, dass bei Einhaltung der genannten Maße noch eine gewisse Kipp- oder Schaukelfähigkeit der Laufplatten 14 gewährleistet ist, andererseits aber im Normalbetrieb durch die Geradlinigkeit im mittleren Längsbereich f die Flächenpressung gegenüber einer umschliessenden Lagerbohrung soweit reduziert ist, dass der Verschleiß klein bleibt. Es hat sich weiter gezeigt, dass bei Einhaltung der angegebenen Maße im Bereich der bei Fluchtverlust zwischen Wellenachse und Käfigachse zu erwartenden Kippbewegungen die Annäherung diametral einander gegenüberliegender Laufplatten 14 innerhalb akzeptabler Grenzen bleibt und damit auch der Druck, den die Kugeln gegen die Welle 178 einerseits und gegen die Laufplatten 14 andererseits ausüben. Die Ausführungsform der Laufplatten nach Figur 28 ist bei allen Ausführungsformen des Linearkugellagers wie vorstehend beschrieben und darüber hinaus anwendbar.

Es ist zu beachten, dass die Laufplatten an ihrer Aussenfläche 16, wie in Figur 2 dargestellt, entsprechend der Innenumfangsfläche einer aufnehmenden Lagergehäusebohrung gerundet sind, so dass eine flächige Anlage der Laufplatten im Bereich des mittleren Längsabschnitts f an der Lagergehäusebohrung gewährleistet ist.

## Patentansprüche

1. Teilringförmige Linearkugelbüchse (10), umfassend einen Käfig (112) mit einer Käfigachse, mit einer Mehrzahl von Kugelumläufen (22, 24, 28) und mit einem durch Längsflächen definierten Spalt,
wobei jeder Kugelumlauf (22, 24, 28) zwei zur Käfigachse im wesentlichen parallele Geradkugelreihen, nämlich eine Tragkugelreihe (22) und eine Rücklaufkugelreihe (24) und zwei die beiden Geradkugelreihen verbindende Bogenkugelreihen (28) aufweist,
wobei weiter die jeweilige Tragkugelreihe (22) nach radial außen durch einen tragenden Geradlaufbahnabschnitt (30) abgestützt ist und nach radial innen einen Schlitz (26) des Käfigs (112) teilweise durchdringt, um an einer von dem Käfig teilweise umschlossenen Welle (178) Anlage nehmen zu können,
wobei weiter gewünschtenfalls an dem Käfig nahe dessen den Längsspalt begrenzenden Längsflächen (186) Längsdichtungsleisten (194) zur Anlage an der Welle (178) vorgesehen sind und
wobei nahe den axial gerichteten Enden des Käfigs Teilringdichtungen (146) zur Anlage an der Welle (178) vorgesehen und durch Formschlußmittel (188, 190) gegen Verdrehung um die Käfigachse gesichert sind,
dadurch gekennzeichnet,
daß die Förmschlußmittel (188,190) ausschließlich nahe den Längsflächen (186) gelegen sind.

2. Teilringförmige Linearkugelbüchse (10), umfassend einen Käfig (112) mit einer Käfigachse, mit einer Mehrzahl von Kugelumläufen (22, 24, 28) und mit einem durch Längsflächen definierten Spalt,
wobei jeder Kugelumlauf (22, 24, 28) zwei zur Käfigachse im wesentlichen parallele Geradkugelreihen, nämlich eine Tragkugelreihe (22) und eine Rücklaufkugelreihe (24) und zwei die beiden Geradkugelreihen verbindende Bogenkugelreihen (28) aufweist,
wobei weiter die jeweilige Tragkugelreihe (22) nach radial außen durch einen tragenden Geradlaufbahnabschnitt (30) abgestützt ist und nach radial innen einen Schlitz (26) des Käfigs (112) teilweise durchdringt, um an einer von dem Käfig teilweise umschlossenen Welle (178) Anlage nehmen zu können,
wobei weiter gewünschtenfalls an dem Käfig nahe dessen den Längsspalt begrenzenden Längsflächen (186) Längsdichtungsleisten (194) zur Anlage an der Welle (178) vorgesehen sind und
wobei nahe den axial gerichteten Enden des Käfigs Teilringdichtungen (146) zur Anlage an der Welle (178) vorgesehen und durch Formschlußmittel (188, 190) nahe den Längsflächen (186) gegen Verdrehung um die Käfigachse gesichert sind, dadurch gekennzeichnet,
daß die Teilringdichtungen (146) über ihre gesamte Umfangserstreckung radial gegenüber der Käfigachse beweglich sind.

3. Linearkugelbüchse nach Anspruch 1 oder 2,
dadurch gekennzeichnet,
daß die Teilringdichtungen (146) mittels eines radial äußeren Grundkörpers (146a) in jeweils einer Teilringnut (184) am Käfig (112) radial beweglich aufgenommen sind und mittels einer radial inneren Dichtlippe (146b) an der Welle (178) anliegen.

4. Linearkugelbüchse nach Anspruch 3,
dadurch gekennzeichnet,
daß die Teilringnut (184) durch einander gegenüberliegende, axialgerichtete Teilringnutbegrenzungsflächen (184a,144a) des Käfig (112) und eines an dem Käfig befestigten Endrings (144) begrenzt ist.

5. Linearkugelbüchse nach Anspruch 4,
dadurch gekennzeichnet,
daß an der axial gerichteten Teilringnutbegrenzungsfläche (144a) des Käfigs (112) mindestens ein axial gerichteter Nocken (188) angebracht ist, welcher eine Durchbrechung (190) des Dichtungsrings (146) gewünschtenfalls mit radialem Spiel durchsetzt.

6. Linearkugelbüchse nach Anspruch 5,
dadurch gekennzeichnet,
dass die axiale Höhe des Nockens (188) grösser ist als die entsprechende axiale Dicke der Teilringdichtung (146) und dass der Endring (144) mit seiner Teilringnutbegrenzungsfläche (144a) an dem Nocken (188) anliegt.

7. Linearkugelbüchse nach Anspruch 6,
dadurch gekennzeichnet,
dass der Endring (144) mit dem Käfig (112) im Bereich des Nockens (188) verschraubt ist.

8. Linearkugelbüchse nach einem der Ansprüche 1 bis 7,
dadurch gekennzeichnet,
dass die Längsdichtungsleisten (194) jeweils einen von einer Längsnut (196) des Käfigs (112) aufgenommenen Wurzelteil (194a) und einen an der Welle (178) anliegenden Zungenteil (194b) aufweisen.

9. Linearkugelbüchse nach Anspruch 8,
dadurch gekennzeichnet, daß der Zungenteil (194b) an der Welle (178) elastisch anliegt.

10. Linearkugelbüchse nach einem der Ansprüche 1 - 9, dadurch gekennzeichnet, daß die Enden (202) der Längsdichtungsleisten (194) die Enden der Teilringdichtungen (146) berühren.

11. Linearkugelbüchse nach Anspruch 10, dadurch gekennzeichnet, daß peripher gerichtete Endflächen (146c) der Teilringdichtungen (146) gegen Endabschnitte (202) der Längsdichtungsleisten (194) anstoßen.

12. Teilringförmige Linearkugelbüchse nach einem der Ansprüche 1 - 11,
dadurch gekennzeichnet,
daß die Längsdichtungsleisten (194) an ihren Enden Vorsprünge (200) aufweisen, welche unter einer Längsspannung der jeweiligen Längsdichtungsleiste (194) gegen jeweils eine axial gerichtete Stützschulter (198) des Käfigs (112) anliegen.

13. Linearkugelbüchse nach Anspruch 12,
dadurch gekennzeichnet,
daß die Stützschulter (198) durch jeweils eine Ausnehmung im Käfig (112) angrenzend an eine axial gerichtete Begrenzungsfläche (184a) der die Teilringdichtung (146) aufnehmenden Teilringnut (184) des Käfigs (112) gebildet ist.

14. Linearkugelbüchse nach Anspruch 13,
dadurch gekennzeichnet,
daß die Längsdichtungsleisten (194) über den jeweiligen Vorsprung (200) in die Teilringnut (184) hineinragende Fortsätze (202) besitzen, und daß die Teilringdichtungen (146) mit peripher gerichteten Endflächen (146c) jeweils an einem Fortsatz (202) anliegen.

15. Linearkugelbüchse nach einem der Ansprüche 12 - 14,
dadurch gekennzeichnet,
daß eine Längsdichtungsleiste (194) mit einem Wurzelteil (194a) und einem Zungenteil (194b) ausgeführt ist, wobei der Wurzelteil (194a) in einer Längsnut (196) des Käfigs (112) aufgenommen ist und der Zungenteil (194b) zur Anlage an der Welle bestimmt ist.

16. Linearkugelbüchse nach Anspruch 15,
dadurch gekennzeichnet,
daß der Wurzelteil (194a) unverklebt von der Längsnut (196) aufgenommen ist.

## Claims

1. A partially ring-shaped linear ball-bearing (10), comprising a cage (112) with a cage axis and with a plurality of re-circulating ball assemblies (22, 24, 28) and with a gap defined by longitudinal surfaces, each re-circulating ball assembly (22, 24, 28) comprising, substantially parallel with the cage axis, two parallel straight rows of balls, namely a row (22) of load-bearing balls and a row (24) of returning balls and, connecting the two straight rows of balls, two curved rows of balls (28),
and furthermore in which the relevant row (22) of load-bearing balls is radially outwardly braced by a load-bearing straight track portion (30) while radially inwardly it partially penetrates a slot (26) in the cage (112) in order to come to bear on a shaft (178) which is partially enclosed by the cage,
and in which, if desired, there are on the cage close to its longitudinal faces (186) which define the longitudinal gap, longitudinal sealing strips (194) adapted to bear on the shaft (178) and
in which, close to the axially directed ends of the cage there are partial ring seals (146) adapted to bear on the shaft (178) and which are secured by form-locking means (188, 190) to prevent rotation about the cage axis, characterised in that the form-locking means (188, 190) are situated exclusively close to the longitudinal faces (186).

2. A partially ring-shaped linear ball-bearing (10) comprising a cage (112) with a cage axis, with a plurality of re-circulating ball assemblies (22, 24, 28) and with a gap defined by longitudinal faces, each re-circulating ball assembly (22, 24, 28) comprising, substantially parallel with the cage axis, two parallel straight rows of balls, namely a row (22) of load-bearing balls and a row (24) of returning balls and, connecting the two straight rows of balls, two curved rows of balls (28),
and furthermore in which the relevant row (22) of load-bearing balls is radially outwardly braced by a load-bearing straight track portion (30) while radially inwardly it partially penetrates a slot (26) in the cage (112) in order to come to bear on a shaft (178) which is partially enclosed by the cage,
and in which, if desired, there are on the cage close to its longitudinal faces (186) which define the longitudinal gap, longitudinal sealing strips (194) adapted to bear on the shaft (178) and are secured by form-locking means (188, 190) close to the longitudinal surfaces (186) to prevent rotation about the cage axis, characterised in that the partial ring seals (146) are over their entire periphery adapted for radial movement in relation to the cage axis.

3. A linear ball-bearing according to Claim 1 or 2, characterised in that the partial ring seals (146) are, by means of a radially outer member (146a) housed for radial movement in a respective partial ring groove (184) on the cage (112) and have a radially inner sealing lip (146b) by which they bear on the shaft (178).

4. A linear ball-bearing according to Claim 3, characterised in that the partial ring groove (184) is defined by oppositely disposed axially directed partial ring groove boundary surfaces (184a, 144a) of the cage (112) and by an end ring (144) which is fixed on the cage.

5. A linear ball-bearing according to Claim 4, characterised in that on the axially directed partial ring groove defining surface (144a) of the cage (112) there is at least one axially directed projection (188) which passes through an aperture (190) in the sealing ring (146), if required with a radial clearance.

6. A linear ball-bearing according to Claim 5, characterised in that the axial height of the projection (188) is greater than the corresponding axial thickness of the partial ring seal (146) and in that the end ring (144) has its partial ring groove defining surface (144a) bearing on the projection (188).

7. A linear ball-bearing according to Claim 6, characterised in that the end ring (144) is screwed to the cage (116) in the region of the projection (188).

8. A linear ball-bearing according to one of Claims 1 to 7, characterised in that the longitudinal sealing strips (194) have in each case a root portion (194a) housed in a longitudinal groove (196) in the cage (112) and a tongue portion (194b) bearing on the shaft (178).

9. A linear ball-bearing according to Claim 8, characterised in that the tongue part (194b) bears resiliently on the shaft (178).

10. A linear ball-bearing according to one of Claims 1 to 9, characterised in that the ends (202) of the longitudinal sealing strips (194) touch the ends of the partial ring seals (146).

11. A linear ball-bearing according to Claim 10, characterised in that peripherally directed end faces (146c) of the partial ring seals 146 abut end portions (202) of the longitudinal sealing strips (194).

12. A partially ring-shaped linear ball-bearing according to one of Claims 1 to 11, characterised in that the longitudinal sealing strips (194) have at their ends projections (200) which under longitudinal tension from the relevant longitudinal sealing strip (194), bear against respective axially directed bracing shoulders (198) on the cage (112).

13. A linear ball-bearing according to Claim 12, characterised in that the bracing shoulder (198) is formed by in each case a recess in the cage (112) adjacent an axially directed boundary surface (184a) of that partial ring groove (184) in the cage (112) which accommodates the partial ring seal (146).

14. A linear ball-bearing according to Claim 13, characterised in that the longitudinal sealing strips (194) have projecting portions (202) which project beyond the relevant projection (200) and into the partial ring groove (184) and in that the partial ring seals (146) have peripherally directed end faces (146c) which bear on a respective projection (202).

15. A linear ball-bearing according to one of Claims 12 to 14,, characterised in that a longitudinal sealing strip (194) is constructed with a root portion (194a) and a tongue portion (194b), the root part (194a) being housed in a longitudinal groove (196) in the cage (112) while the tongue part (194b) is intended to bear on the shaft.

16. A linear ball-bearing according to Claim 15, characterised in that the root portion (194a) is, without adhesion, housed in the longitudinal groove (196).

## Revendications

1. Douille à billes linéaire (10) en forme de partie d'anneau, comportant une cage (112) avec un axe de cage, avec plusieurs circuits de billes (22, 24, 28) et avec une fente définie par des surfaces longitudinales,
dans laquelle chaque circuit de billes (22, 24, 28) comporte deux rangées de billes rectilignes, sensiblement parallèles à l'axe de la cage, à savoir une rangée de billes porteuses (22) et une rangée de billes de retour (24) ainsi que deux rangées de billes en arc (28) reliant les deux rangées de billes rectilignes.
dans laquelle, en outre, la rangée de billes porteuses (22) est soutenue, radialement à l'extérieur, par une partie de chemin de roulement rectiligne (30) porteuse et traverse partiellement, radialement vers l'intérieur, une fente (26) de la cage (112), afin de pouvoir s'appliquer contre un arbre (178), en partie entouré par la cage,
dans laquelle en outre il est prévu, au besoin, sur la cage, à proximité de ses surfaces longitudinales (186), délimitant la fente longitudinale, des lèvres d'étanchéité longitudinales (194) destinées à s'appliquer contre l'arbre (178) et
dans laquelle, à proximité des extrémités dirigées axialement de la cage, il est prévu des parties de bague d'étanchéité (146) destinées à s'appliquer contre l'arbre (178) et qui sont bloquées, par des moyens de blocage par concordance de forme (188, 190), de manière à les empêcher de tourner autour de l'axe de la cage,
caractérisée en ce que les moyens de blocage par concordance de forme (188, 190) sont situés exclusivement à proximité des surfaces longitudinales (186).

2. Douille à billes linéaire (10) en forme de partie d'anneau, comportant une cage (112) avec un axe de cage, avec plusieurs circuits de billes (22, 24, 28) et avec une fente définie par des surfaces longitudinales,
dans laquelle chaque circuit de billes (22, 24, 28) comporte deux rangées de billes rectilignes, sensiblement parallèles à l'axe de la cage, à savoir une rangée de billes porteuses (22) et une rangée de billes de retour (24) ainsi que deux rangées de billes en arc (28) reliant les deux rangées de billes rectilignes.
dans laquelle, en outre, la rangée de billes porteuses (22) est soutenue, radialement à l'extérieur, par une partie de chemin de roulement rectiligne (30) porteuse et traverse partiellement, radialement vers l'intérieur, une fente (26) de la cage (112), afin de pouvoir s'appliquer contre un arbre (178), en partie entouré par la cage,
dans laquelle en outre il est prévu, au besoin, sur la cage, à proximité de ses surfaces longitudinales (186), délimitant la fente longitudinale, des lèvres d'étanchéité longitudinales (194) destinées à s'appliquer contre l'arbre (178) et
dans laquelle, à proximité des extrémités dirigées axialement de la cage, il est prévu des parties de bague d'étanchéité (146) destinées à s'appliquer contre l'arbre (178) et qui sont bloquées, par des moyens de blocage par concordance de forme (188, 190), de manière à les empêcher de tourner autour de l'axe de la cage,
caractérisée en ce que les parties de bague d'étanchéité (146) sont mobiles sur toute leur extension périphérique, radialement par rapport à l'axe de la cage.

3. Douille à billes linéaire selon la revendication 1 ou 2, caractérisée en ce que les parties de bague d'étanchéité (146) sont logées, mobiles radialement, chacune dans une partie de rainure annulaire (184) de la cage (112), au moyen d'une embase (146a) radialement extérieure et s'appliquent contre l'arbre (178), au moyen d'une lèvre d'étanchéité (146b) radialement intérieure.

4. Douille à billes linéaire selon la revendication 3, caractérisée en ce que la partie de rainure annulaire (184) est limitée par des surfaces de délimitation (184a, 144a) de la partie de rainure annulaire, dirigées axialement, opposées les unes aux autres, de la cage (112) et par une bague terminale (144), fixée sur la cage.

5. Douille à billes linéaire selon la revendication 4, caractérisée en ce qu'il est fixé sur la surface de délimitation (144a) de la partie de rainure annulaire, dirigée axialement, de la cage (112), au moins un ergot (188) dirigé axialement qui traverse un ajour (190) de la bague d'étanchéité (146), au besoin avec un jeu radial.

6. Douille à billes linéaire selon la revendication 5, caractérisée en ce que la hauteur axiale de l'ergot (188) est supérieure à l'épaisseur axiale correspondante de la partie de bague d'étanchéité (146) et en ce que la bague terminale (144) s'applique avec sa surface de délimitation (144a) de la partie de rainure annulaire, contre l'ergot (188).

7. Douille à billes linéaire selon la revendication 6, caractérisée en ce que la bague terminale (144) est vissée sur la cage (112), dans la zone de l'ergot (188).

8. Douille à billes linéaire selon l'une des revendications 1 à 7, caractérisée en ce que les lèvres d'étanchéité longitudinales (194) comportent chacune une partie en talon (194a), logée par une rainure longitudinale (196 de la cage (112), et une partie en languette (194b) s'appliquant contre l'arbre (178).

9. Douille à billes linéaire selon la revendication 8, caractérisée en ce que la partie en languette (194b) s'applique de manière élastique contre l'arbre (178).

10. Douille à billes linéaire selon l'une des revendications 1 à 9, caractérisée en ce que des extrémités (202) des lèvres d'étanchéité longitudinales (194) sont en contact avec des extrémités des parties de bague d'étanchéité (146).

11. Douille à billes linéaire selon la revendication 10, caractérisée en ce que des surfaces terminales (146c), dirigées périphériquement, des parties de bague d'étanchéité (146), viennent contre des parties terminales (202) des lèvres d'étanchéité longitudinales (194).

12. Douille à billes linéaire en forme de partie d'anneau selon l'une des revendications 1 à 11, caractérisée en ce que les lèvres d'étanchéité longitudinales (194) présentent à leurs extrémités des saillies (200) qui s'appliquent chacune, sous une tension longitudinale de la lèvre d'étanchéité longitudinale (194) respective, contre un épaulement d'appui (198), dirigé axialement, de la cage (112).

13. Douille à billes linéaire selon la revendication 12, caractérisée en ce que les épaulements d'appui (198) sont formés chacun par un évidement pratiqué dans la cage (112), adjacent à une surface de délimitation (184a), dirigée axialement, de la partie de rainure annulaire (184), logeant la partie de bague annulaire (146), de la cage (112).

14. Douille à billes linéaire selon la revendication 13, caractérisée en ce que les lèvres d'étanchéité longitudinales (194) possèdent des prolongements (202), s'engageant, par la saillie (200) respective, dans la partie de rainure annulaire (184) et en ce que les parties de bague annulaire (146) s'appliquent chacune, avec des surfaces terminales (146c) dirigées périphériquement, contre un prolongement (202).

15. Douille à billes linéaire selon l'une des revendications 12 à 14, caractérisée en ce qu'une lèvre d'étanchéité longitudinale (194) est réalisée avec une partie en talon (194a) et une partie en languette (194b), la partie en talon (194a) étant logée dans une rainure longitudinale (196) de la cage (112) et la partie en languette (194b) étant destinée à s'appliquer contre l'arbre.

16. Douille à billes linéaire selon la revendications 15, caractérisée en ce que la partie en talon (194a) est logée,non collée,par la rainure longitudinale (196).
